# EUROPÄISCHE PATENTSCHRIFT

(11) **EP 1 631 477 B1**
(45) Veröffentlichungstag und Bekanntmachung des Hinweises auf die Patenterteilung: **18.08.2010**
(21) Anmeldenummer: 04738514.1
(22) Anmeldetag: 17.05.2004
(51) Int. Cl.: B60R 1/08

(54) **FAHRZEUGRÜCKSPIEGEL**
REAR-VIEW MIRROR FOR A VEHICLE
RETROVISEUR DE VEHICULE

(30) Priorität: 17.05.2003 DE 10322319
(43) Veröffentlichungstag der Anmeldung: 08.03.2006
(73) Patentinhaber: SMR Patents S.à.r.l., 1653 Luxembourg (LU)
(72) Erfinder: SCHRAMM, Bernd, 30823 Garbsen (DE); PIRINGER, Helmut, 85598 Baldham (DE)
(74) Vertreter: Rausch, Gabriele
(86) Internationale Anmeldenummer: PCT/DE2004/001040
(87) Internationale Veröffentlichungsnummer: WO 2004/101314

(56) Entgegenhaltungen:
- WO-A-96/21873
- DE-A- 3 417 084
- DE-B- 1 144 138

## Beschreibung

Die Erfindung betrifft einen Fahrzeugrückspiegel mit einer lichtdurchlässigen ersten Scheibe und einem zu der Scheibe beabstandet angeordneten Reflexionskörper, der in Blickrichtung bzw. Lichteinfallsrichtung hinter der Scheibe angeordnet ist und eine Reflexionsschicht aufweist.

Aus der DE 39 17 877 A1 ist ein abblendbarer Spiegel bekannt, bei dem vor einer Spiegelscheibe eine durchsichtige Scheibe angeordnet ist, deren Abstand von der Spiegelscheibe durch eine von einer den Lichteinfall messenden Photozelle gesteuerten Einrichtung veränderbar ist. Der Zwischenraum zwischen der Spiegelscheibe und der durchsichtigen Scheibe ist mit einer lichtabsorbierenden Flüssigkeit gefüllt und mit einem Reservoir für die Flüssigkeit verbunden. Durch Veränderung des Abstandes der Spiegelscheibe zu der durchsichtigen Scheibe wird die Menge der lichtabsorbierenden Flüssigkeit variiert, so dass der Reflexionsgrad eingestellt werden kann.

Ein solcher Spiegel ist sehr schwer und kostenaufwendig und die Verstellung bzw. Einstellung des Reflexionsgrades dauert relativ lange.

Die DE 34 17 084 A1 beschreibt einen abblendbaren Innenspiegel für Kraftfahrzeuge mit einem Gehäuse, in dem ein Spiegel mittels eines Betätigungsgliedes zwischen zwei Endstellungen schwenkbar gelagert ist. Vor dem Spiegel befindet sich eine Glasplatte. Über ein lichtoptisches Schaltglied kann der Spiegel über ein Relais und ein Elektromagnet automatisch verkippt werden.

Die DE 1 144 138 A1 betrifft einen Rückblickspiegel für Kraftfahrzeuge mit einer ferngesteuerten, elektromagnetischen Abblendvorrichtung, die mit einer Fotozellensteuerung ausgerüstet ist. Der Spiegel besteht aus einem ferromagnetischen Material, der in einem Spiegelgehäuse untergebracht ist. Der Spiegel ist in dem Spiegelgehäuse um eine Achse schwenkbar und wird durch eine Rückstellfeder in eine ausgestellte Stellung gedrückt. Eine Glassscheibe deckt den Spiegel ab. Ein Elektromagnet kann durch eine Betätigung der Fotozellensteuerung eingeschaltet werden und zieht dann den Spiegel in eine abgelenkte Stellung.

Aufgabe der vorliegenden Erfindung ist es, einen Fahrzeugrückspiegel bereitzustellen, der eine hohe Abbildungsqualität aufweist, preiswert herstellbar ist und eine schnelle Abblendung gewährleistet.

Erfindungsgemäß wird diese Aufgabe dadurch gelöst, dass die Reflexionsschicht in ihrer Winkelstellung relativ zu der vorderen Scheibe verstellbar ist. Durch die Verstellung der Reflexionsschicht dergestalt, dass die Winkelstellung zwischen der Scheibe und der Reflexionsschicht bzw. dem Reflexionskörper verändert werden, wird das Hauptlicht, das durch die Reflexionsschicht normalerweise auf das Auge des Betrachters wirft, an dem Auge vorbei geleitet, so dass die Reflexion der Lichtstrahlen lediglich an der vorderen Scheibe erfolgt. Es wird also nur das Restlicht, welches an der Oberfläche der vorderen Scheibe reflektiert wird, dem Auge zugeleitet, so dass die gespiegelten Objekte abgedunkelt erscheinen, da das Restlicht eine wesentlich geringere Lichtstärke als das Hauptlicht hat. Eine Blendung des Betrachters durch das das Auge erreichende Restlicht ist somit ausgeschlossen. Um bei einem Unfall Elemente der Scheibe und des Reflexionskörpers beieinander zu halten und das Herumfliegen kleiner Bruchstücke zu vermeiden, ist zwischen der Scheibe und dem Reflexionskörper ein Medium angeordnet, das sowohl mit der Scheibe als auch mit dem Reflexionskörper bzw. der Reflexionsschicht haftend verbunden ist.

In einer Weiterbildung der Erfindung ist vorgesehen, dass der gesamte Reflexionskörper um eine Achse verschwenkt wird, so dass der beschriebene Effekt durch das Verschwenken des gesamten Reflexionskörpers, der auf der der Scheibe zugewandten Oberfläche vorzugsweise starr und eben ausgebildet ist, erzielt wird. Alternativ dazu kann die Reflexionsschicht bzw. der Reflexionskörper gebogen werden, so dass das Hauptlicht an dem Auge vorbei geleitet wird.

In einer Weiterbildung der Erfindung ist vorgesehen, dass ein Aktuator dem Reflexionskörper bzw. der Reflexionsschicht zugeordnet ist, der die Reflexionsschicht in ihrer Winkelstellung zu der Scheibe verändert bzw. den Reflexionskörper biegt oder verschwenkt. Eine Betätigung über einen Aktuator hat den Vorteil, dass eine Abblendung erfolgt, ohne dass eine Hand von dem Lenkrad genommen werden muss, was zu einer erhöhten Fahrzeugsicherheit führt.

Ein mit dem Aktuator gekoppelter Lichtsensor ermöglicht eine automatische Verstellung und Abblendung des Rückspiegels, indem bei Überschreiten eines vorgegebenen Helligkeitswertes der Lichtsensor den Aktuator ansteuert und aktiviert, so dass das Hauptlicht an dem Auge vorbei geleitet wird.

Vorzugsweise weist dieses Medium einen optisch hohen Reinheitsgrad und einen geringen Brechungsindex auf, um eine möglichst unverfälschte Abbildungsqualität bei einem blendfreien Licht zu gewährleisten. Das Medium ist vorzugsweise ein Gel, insbesondere ein Silikongel, so dass Lichtstrahlen die erste Scheibe sowie das Gel ohne optische Dispersion und Verzerrungen durchdringen kann.

Durch die Erfindung kann eine lautlose und stufenlose Abblendung und Verstellung des Reflexionskörpers erfolgen, was eine Komforterhöhung darstellt. Weiterhin treten aufgrund der nicht vorhandenen optischen Dispersion keine permanenten Farbsäume auf, was eine hohe Abbildungsqualität im Betrieb bei blendfreiem Licht gewährleistet.

Eine Ausführungsform der Erfindung ist anhand der beigefügten Figuren erläutert. Es zeigen:
- Figur 1 -: einen schematischen Aufbau eines Fahrzeugrückspiegels;
- Figur 2 -: die Funktionsweise im blendfreien Betrieb; sowie
- Figur 3 -: die Funktionsweise bei abgeblendetem Spiegel.

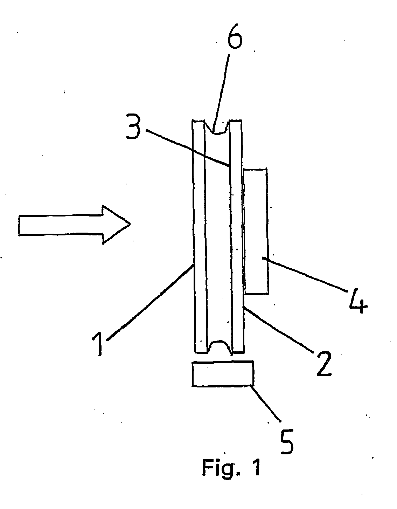

In der Figur 1 ist der allgemeine Aufbau eines Fahrzeugrückspiegels gemäß der vorliegenden Erfindung dargestellt. Der Fahrzeugrückspiegel weist eine erste Scheibe 1 aus einem Glas oder einem anderen durchsichtigen Medium auf, die zu einem Reflexionskörper 2 beabstandet ist. Der Reflexionskörper 2 weist eine Reflexionsschicht 3 auf, die als eine übliche Spiegelschicht auf dem Reflexionskörper 2 aufgebracht sein kann. Zwischen der Scheibe 1 und der Reflexionsschicht 3 ist ein Medium 6 angeordnet, das sowohl an der Scheibe 1 als auch an der Reflexionsschicht 3 bzw. dem Reflexionskörper 2 anhaftet. Das Medium 6 ist vorzugsweise ein Gel mit einem optisch hohen Reinheitsgrad und einem Brechungsindex zwischen n =1,3 und 1,5. Vorzugsweise wird ein Silikongel verwendet, damit im Fall eines Splitterns der Scheibe 1 keine Bruchstücke durch den Fahrzeuginnenraum fliegen können.

Dem Reflexionskörper 2 ist ein Aktuator 4 zugeordnet, der den Reflexionskörper 2 entweder verschwenkt oder biegt, so dass die Reflexionsschicht 3 in ihrer Winkelstellung relativ zu der Scheibe 1 verändert wird. Der Aktuator kann entweder über einen manuell bedienbaren Schalter oder über einen zugeordneten Lichtsensor 5 angesteuert werden und so bei Bedarf oder automatisch eine Abblendung einleiten. Der in der Figur 1 darstellte Pfeil zeigt die Hauptblickrichtung sowie die Hauptlichteinfallsrichtung an.

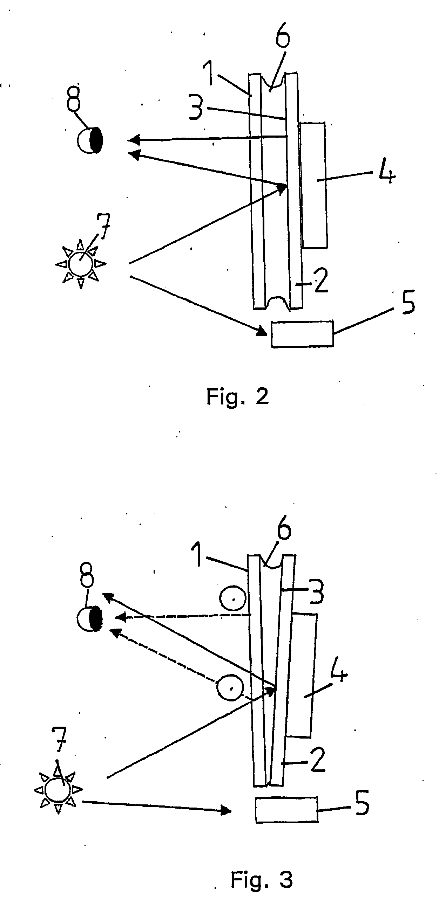

Die Funktionsweise des Fahrzeugrückspiegels bei blendfreiem Betrieb ist in der Figur 2 dargestellt. Von einer Lichtquelle 7 fällt Licht sowohl auf den Lichtsensor 5 als auch auf den Fahrzeugrückspiegel und durchdringt dabei die Scheibe 1 sowie das zwischen der Scheibe 1 und dem Reflexionskörper 2 befindliche Gel 6. An der Reflexionsschicht 3 wird das Licht zurückgeworfen, durchdringt wieder das Gel 6 und die durchsichtige Scheibe 1 und fällt auf das Auge 8 eines Fahrzeugnutzers, der das entsprechende Objekt 7 erkennt.

In der in der Figur 2 dargestellten Position ist die Scheibe 1 und die Reflexionsschicht 3 bzw. der Reflexionskörper 2 parallel zueinander ausgerichtet. Die Lichtstrahlen durchdringen die Scheibe 1 sowie das Gel 6 ohne optische Dispersion und Verzerrungen, so dass die Abbildung des gespiegelten Objektes 7 auf der Reflexionsfläche 3 des Reflexionskörpers 2 erfolgt.

Wird ein vorgegebener Wert der Lichtstärke des Objektes 7 überschritten, das heißt, dass der Fahrzeugnutzer durch das reflektierte Licht geblendet wird, aktiviert der Lichtsensor 5 den Aktuator 4, der den Reflexionskörper 2 und damit die Reflexionsschicht 3 in einem Winkel zu der Scheibe 1 verstellt.

In der Figur 3 ist dargestellt, dass die Reflexionsfläche 3 und die Scheibe 1 nicht parallel zueinander orientiert sind. Bei unveränderter Stellung der Scheibe 1, also ohne Positionsveränderung des Spiegels innerhalb des Fahrzeuges, wird im in der Figur 3 dargestellten, aktivierten Zustand das Hauptlicht von der Reflexionssicht 3 an dem Auge 8 vorbei geleitet, so dass keine Blendung auftritt. Lediglich das durch die gestrichelte Linie dargestellte Restlicht aufgrund der diffusen Lichtreflexion auf der vorderen Oberfläche der Scheibe 1 wird dem Auge 8 zugeleitet, so dass die gespiegelten Objekte abgedunkelt erscheinen. Eine Blendung ist ausgeschlossen, da nur ein geringer Teil des auf den Spiegel treffenden Lichtes dem Auge 8 zugeführt wird.

Vorteilhafterweise ist der Lichtsensor 5 mit einer Memory-Funktion ausgestattet, so dass die Funktion des automatischen Abblendens durch eine Verstellung der Reflexionsschicht 3 bzw. des Reflexionskörpers 2 durch den Aktuator in Gestalt eines Verschwenkens oder Biegens des Reflexionskörpers 3 nutzerspezifisch erfolgen kann. Somit kann den individuellen Bedürfnissen nach einem etwas früheren oder späteren Abblenden des Fahrzeugrückspiegels Rechnung getragen werden.

Der erfindungsgemäße Spiegel muss bei Überschreiten eines eingestellten Wertes der Lichtstärke nicht mehr von Hand verstellt werden und ändert zudem seine für den Nutzer erkennbare Position innerhalb des Fahrzeuges in der Abblendstellung nicht. Die bei üblichen Spiegeln auftretende, permanente Dispersion in Gestalt von Farbsäumen und die damit verbundene geringere Abbildungsqualität wird vermieden, ebenso kann eine nahezu lautlose Betätigung erfolgen.

## Patentansprüche

1. Fahrzeugrückspiegel mit einer lichtdurchlässigen Scheibe (1) und einem zu der Scheibe (1) beabstandeten Reflexionskörper (2), der in Blickrichtung hinter der Scheibe (1) angeordnet ist und eine Reflexionsschicht (3) aufweist, die in ihrer Winkelstellung zu der vorderen Scheibe (1) verstellbar ist, **dadurch gekennzeichnet, dass** zwischen der Scheibe (1) und dem Reflexionskörper (2) ein Medium (6) angeordnet ist, das sowohl an der Scheibe (1) als auch an dem Reflexionskörper (2) haftet.

2. Fahrzeugrückspiegel nach Anspruch 1, **dadurch gekennzeichnet, dass** der Reflexionskörper (2) verkippbar oder biegbar ausgebildet ist.

3. Fahrzeugrückspiegel nach Anspruch 1 oder 2, **dadurch gekennzeichnet, dass** ein Aktuator (4) dem Reflexionskörper (2) zugeordnet ist, der den Reflexionskörper (2) verlagert oder biegt.

4. Fahrzeugrückspiegel nach Anspruch 3, **dadurch gekennzeichnet, dass** ein Lichtsensor (5) vorgesehen ist, der mit dem Aktuator (4) gekoppelt ist und bei Überschreiten eines vorgegebenen Lichtstärkewertes eine automatische Verstellung der Reflexionsschicht (3) oder des Reflexionskörpers (2) veranlasst.

5. Fahrzeugrückspiegel nach Anspruch 1, **dadurch gekennzeichnet, dass** das Medium (6) einen optisch hohen Reinheitsgrad aufweist.

6. Fahrzeugrückspiegel nach Anspruch 1, **dadurch gekennzeichnet, dass** das Medium (6) ein Gel, insbesondere Silikongel ist.

## Claims

1. Vehicle rear-view mirror comprising a light-permeable plate (1) and a reflection member (2) that is distanced from the plate (1), arranged behind the plate (1) in the viewing direction and comprises a reflection layer (3), of which the angle relative to the front plate (1) is adjustable, **characterised in that** a medium (6) is arranged between the plate (1) and the reflection member (2) and adheres to both the plate (1) and the reflection member (2).

2. Vehicle rear-view mirror according to claim 1, **characterised in that** the reflection member (2) is tiltable or bendable.

3. Vehicle rear-view mirror according to either claim 1 or claim 2, **characterised in that** an actuator (4) is associated with the reflection member (2) and moves or bends the reflection member (2).

4. Vehicle rear-view mirror according to claim 3, **characterised in that** a light sensor (5) is provided that is coupled to the actuator (4) and automatically displaces the reflection layer (3) or the reflection member (2) if a predetermined light intensity value is exceeded.

5. Vehicle rear-view mirror according to claim 1, **characterised in that** the medium (6) comprises an optically high purity level.

6. Vehicle rear-view mirror according to claim 1, **characterised in that** the medium (6) is a gel, in particular silicone gel.

## Revendications

1. Rétroviseur de véhicule avec in disque transparent (1) et un corps réfléchissant (2) écarté du disque (1) qui est disposé dans le sens du regard derrière le disque (1) et présente une couche réfléchissante (3) qui peut être réglée au niveau de sa position angulaire par rapport au disque avant (1), **caractérisé en ce qu'**un support (6) qui adhère aussi bien au disque (1) qu'au corps réfléchissant (2), est disposé entre le disque (1) et le corps réfléchissant (2).

2. Rétroviseur de véhicule selon la revendication 1, **caractérisé en ce que** le corps réfléchissant (2) est réalisé de manière à pouvoir être basculé ou plié.

3. Rétroviseur de véhicule selon la revendication 1 ou 2, **caractérisé en ce qu'**un actionneur (4) qui déplace ou plie le corps réfléchissant (2), est associé au corps réfléchissant (2).

4. Rétroviseur de véhicule selon la revendication 3, **caractérisé en ce qu'**un capteur de lumière (5) est prévu, lequel est accouplé à l'actionneur (4) et provoque un déplacement automatique de la couche réfléchissante (3) ou du corps réfléchissant (2) en cas de dépassement d'une valeur d'intensité lumineuse prédéterminée.

5. Rétroviseur de véhicule selon la revendication 1, **caractérisé en ce que** le support (6) présente un degré de pureté élevé du point de vue optique.

6. Rétroviseur de véhicule selon la revendication 1, **caractérisé en ce que** le support (6) est un gel, notamment du gel de silicone.
